(19) Europäisches Patentamt
European Patent Office
Office européen des brevets

(11) Numéro de publication: **0 379 228 B1**

(12) **FASCICULE DE BREVET EUROPEEN**

(45) Date de publication de fascicule du brevet: **26.01.94**

(51) Int. Cl.[5]: **C08G 73/12**, C08F 222/40

(21) Numéro de dépôt: **90104134.3**

(22) Date de dépôt: **14.12.87**

(60) Numéro de publication de la demande initiale en application de l'article 76 CBE : **0 273 839**

# (54) Procédé de préparation de polymères à groupements imides à partir de bis-imides et d'alkenyloxyanilines.

(30) Priorité: **17.12.86 FR 8617917**

(43) Date de publication de la demande:
**25.07.90 Bulletin 90/30**

(45) Mention de la délivrance du brevet:
**26.01.94 Bulletin 94/04**

(84) Etats contractants désignés:
**AT BE CH DE ES FR GB IT LI LU NL SE**

(56) Documents cités:
**FR-A- 2 094 607**
**FR-A- 2 462 458**

(73) Titulaire: **CIBA-GEIGY AG**
**Klybeckstrasse 141**
**CH-4002 Basel(CH)**

(72) Inventeur: **Barthelemy, Pascal**
**21, rue de la Part-Dieu**
**F-69003 Lyon(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.09/3.3.3)

## Description

Dans la demande française 85/16971 déposée par la Demanderesse le 13 novembre 1985, on a décrit et revendiqué des polymères à groupements imides qui sont obtenus par réaction entre :

(a) un N,N'-bis-imide ou une association de plusieurs bis-imides de formule :

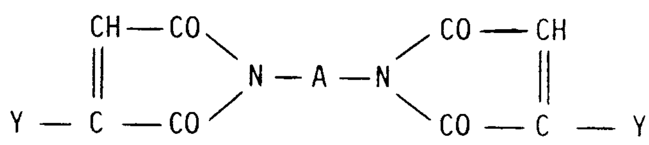

(I)

dans laquelle :

. le symbole Y représente H, $CH_3$ ou Cl

. le symbole A représente un radical divalent choisi dans le groupe constitué par les radicaux : cyclohexylènes ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule :

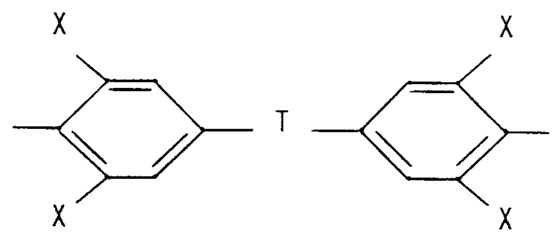

dans laquelle T représente un lien valentiel simple ou un groupement :

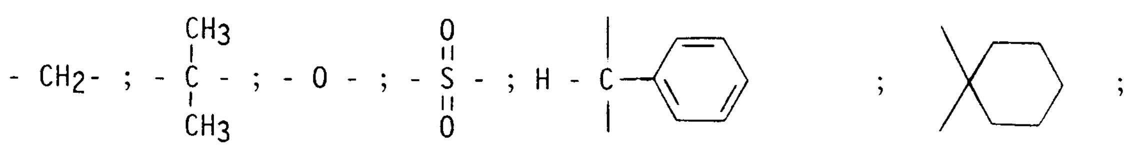

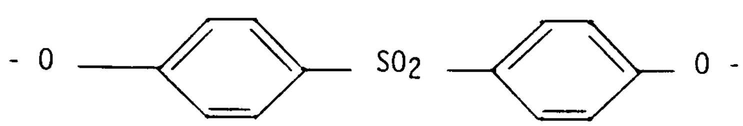

et X représente un atome d'hydrogène, un radical méthyle, éthyle ou isopropyle ;

(b) une ou plusieurs alkényloxyanilines de formule :

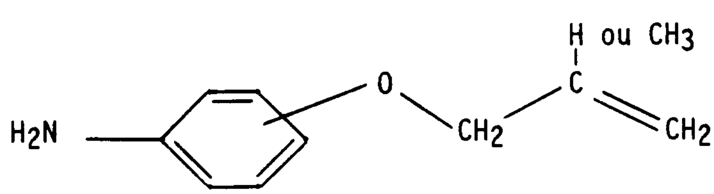

(II)

dans laquelle le radical allyloxyl ou méthallyloxy est en position ortho, méta ou para par rapport à l'atome de carbone du cycle benzénique relié à l'azote,

et éventuellement (c) un ou plusieurs autres monomères copolymérisables de formule :

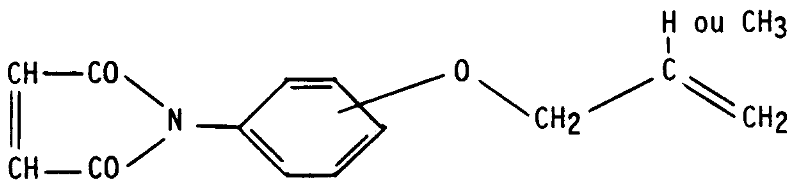

(III)

dans laquelle le radical allyloxy ou méthallyloxy est en position ortho, méta ou para par rapport à l'atome de carbone du cycle benzénique relié à l'azote.

Un des avantages lié à la mise en oeuvre de l'invention conforme à la demande française précitée réside dans le fait qu'elle permet d'obtenir des résines durcies ayant des propriétés d'usage tout aussi excellentes que celles des poly(aminobismaléimides) selon le brevet français n° 1.555.564 actuellement disponibles dans le commerce, sans avoir à prendre en cours de préparation et de transformation des précautions sur le plan de l'hygiène. Cet inconvénient peut se rencontrer en effet avec les poly-(aminobismaléimides) de l'art antérieur lorsque la diamine biprimaire utilisée est de nature aromatique du fait de la toxicité que peuvent présenter certaines d'entre elles.

On indique, dans la demande française précitée, que l'ajout à côté du bis-imide (a) et du réactif aminé (b), du réactif facultatif (c) est une mesure qui permet d'augmenter la fluidité des prépolymères et d'améliorer la résistance à l'usure et au choc des articles moulés obtenus.

On a constaté cependant qu'il peut être avantageux de pouvoir disposer d'un milieu réactionnel de polymérisation qui présente une plus grande réactivité. On a trouvé que cet objectif peut être atteint en faisant réagir les réactifs (a), (b) et éventuellement (c) en présence d'un catalyseur approprié.

La présente invention concerne un procédé de preparation de polymère à groupements imides se trouvant sous forme de polymères durcis, insolubles dans les solvants organiques polaires consistant dans le dioxanne, le tétrahydrofuranne, l'oxyde de dibutyle, le diméthylformamide, le diméthylsulfoxyde, la N-méthylpyrrolidone, le diméthylacétamide le méthylglycol et la méthyléthyl-cétone et ne présentant pas de ramollissement notable au-dessous de la température à laquelle ils commencent à se dégrader, qui consiste à chauffer directement à une température comprise entre 50 °C et 300 °C le mélange des réactifs suivants :

(a) un N,N'-bis-imide ou une association de plusieurs bis-imides de formule :

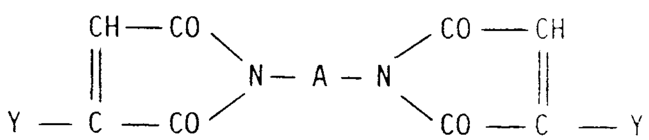

(I)

dans laquelle :

- . le symbole Y représente H, $CH_3$ ou Cl
- . le symbole A représente un radical divalent choisi dans le groupe constitué par les radicaux : cyclohexylènes ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule :

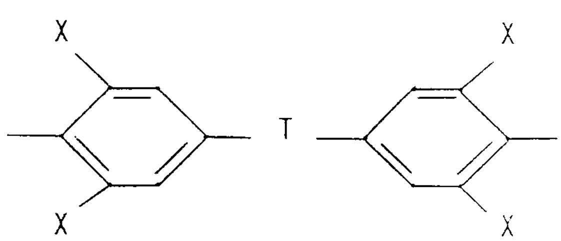

dans laquelle T représente un lien valentiel simple ou un groupement :

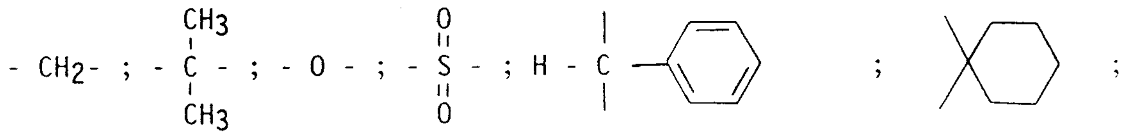

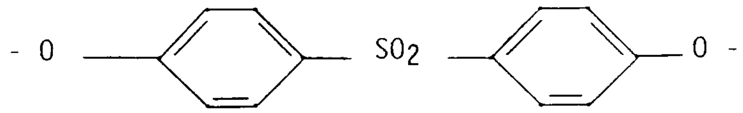

et X représente un atome d'hydrogène, un radical méthyle, éthyle ou isopropyle ;
(b) une ou plusieurs alkényloxyanilines de formule :

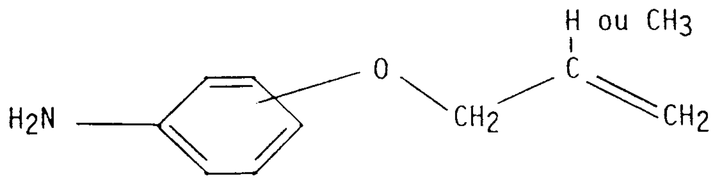

(II)

éventuellement (c) un réactif copolymérisable qui consiste :

- soit dans un ou plusieurs monomères de formule :

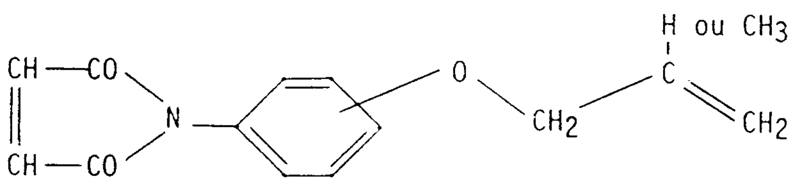

(III)

dans laquelle le radical allyloxy ou méthallyloxy est en position ortho, méta ou para par rapport à l'atome de carbone du cycle benzénique relié à l'azote ;

- soit dans le composé comprenant :
  * un mélange d'un monomère de formule :

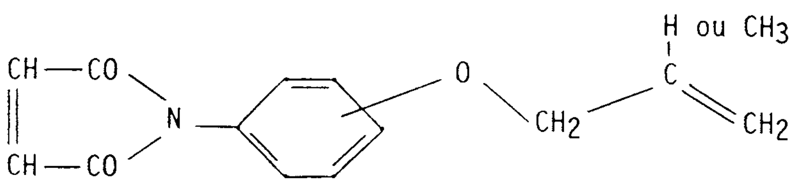

(III)

dans laquelle le radical allyloxy ou méthallyloxy est en position ortho, métha ou para par rapport à l'atome de carbone du cycle benzénique relié à l'azote.

  * avec :

. au moins un dérivé monosubstitué de formule :

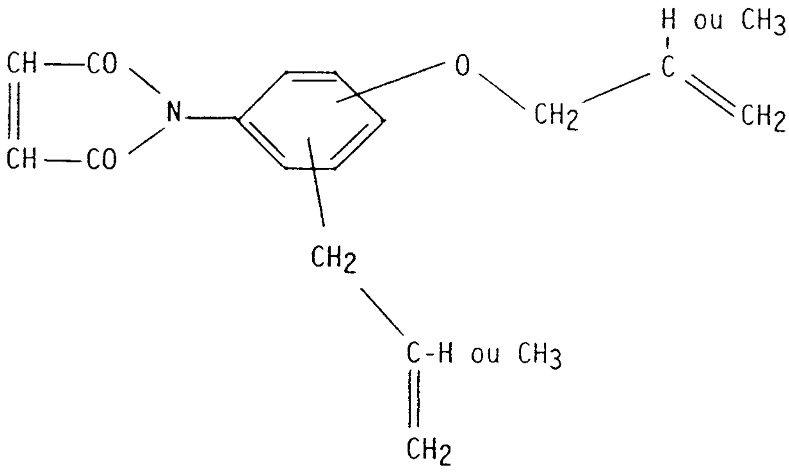

(IV)

. et éventuellement un ou plusieurs dérivés disubstitués de formule :

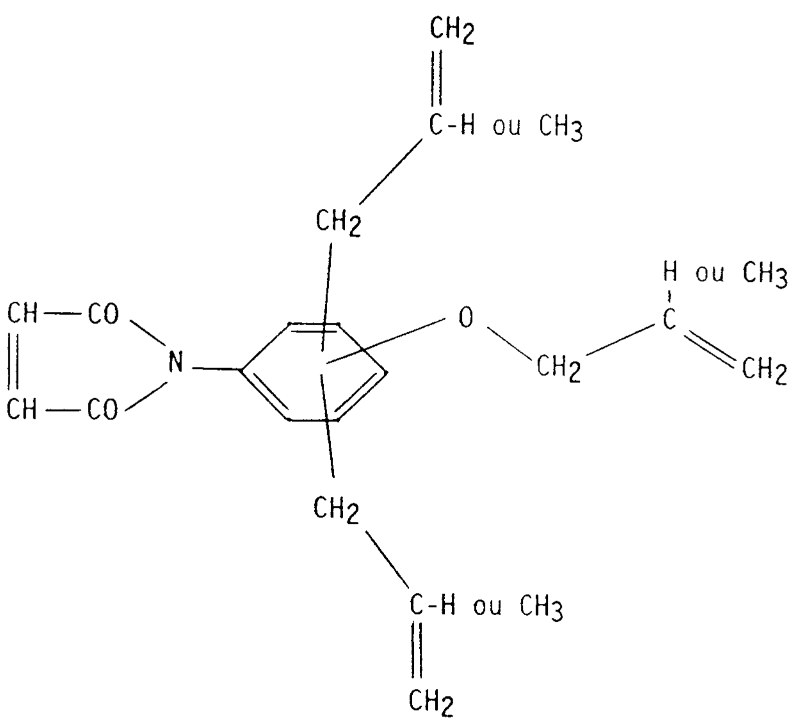

(V)

les quantités de N,N'-bis-imide(s) (a), de réactif aminé (b) et eventuellement de réactif copolymérisable (c) étant choisies de façon à ce que le rapport r :

$$\frac{\text{poids total des réactifs à groupements imide (a) + éventuellement (c)}}{\text{poids du réactif à groupement } NH_2 \text{ (b)}}$$

se situe dans l'intervalle allant de 0,5/1 à 10/1 et

le poids de réactif copolymérisable (c), quand on choisit d'en utiliser un, représente jusqu'à 40 % du poids total des réactifs (a) + (b) + (c),

ledit procédé étant caractérisé en ce que la polymérisation est réalisée en présence d'un composé imidazole (d) répondant à la formule générale

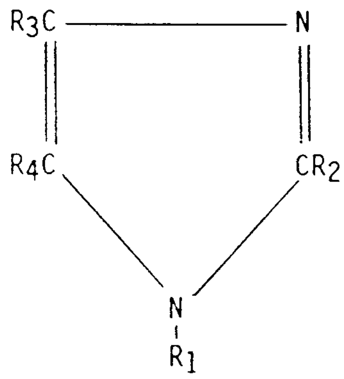

(VI)

dans laquelle $R_1$, $R_2$, $R_3$ et $R_4$, identiques ou différents, représentent chacun : un atome d'hydorgène, un radical alkyle ou alcoxy ayant de 1 à 20 atomes de carbone, vinyle, phényle, nitro, $R_3$ pouvant former avec $R_4$ et les atomes de carbone auxquels sont liés ces radicaux un cycle unique,

$R_1$ pouvant également représenter un groupement carbonyle lié à un deuxième cycle imidazole, et la quantité de composé imidazole (d) se situe dans l'intervalle allant de 0,01 à 1 % en poids par rapport à l'ensemble des réactifs (a) + (b) + éventuellement (c).

S'agissant du réactif facultatif (c), il peut consister dans les N-(méth)allyloxyphénylmaléimides de formule (III) visés par la demande française 85/16971 précitée.

Les maléimides de formule (III) sont des produits nouveaux qui peuvent être notamment préparés, comme il est indiqué dans la demande française précitée, à partir des aminophénols (ortho, méta ou para), selon la réaction de Claisen.

On peut par exemple faire réagir l'aminophénol, dont on a préalablement bloqué la fonction amine par réaction avec l'anhydride acétique pour former l'acétamidophénol, avec selon le cas un halogénure d'allyle (le plus souvent le bromure) ou de méthallyle en solution dans l'acétone et en présence de carbonate dipotassique. La fonction ami ne est ensuite régénérée par hydrolyse.

On prépare ensuite de manière classique le maléimide correspondant en faisant réagir en solution l'allyloxyaniline ou la méthallyloxyaniline obtenue précédemment avec l'anhydride maléique, en présence d'anhydride acétique, de triéthylamine et d'un sel de nickel (acétate de nickel en particulier). On obtient ainsi le N-(allyloxyphényl)-maléimide ou le N-(méthallyloxyphényl)-maléimide.

Le réactif facultatif (c) peut consister encore dans un composé comprenant :

- un mélange d'un monomère de formule :

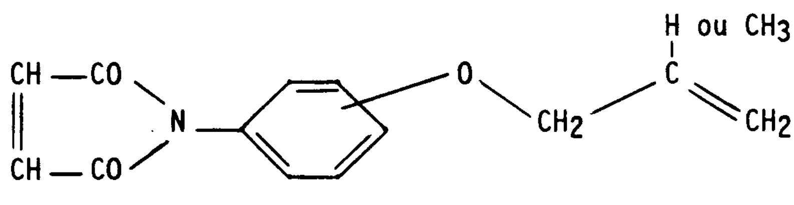

(III)

  dans laquelle le radical allyloxy ou méthallyloxy est en position ortho, métha ou para par rapport à l'atome de carbone du cycle benzénique relié à l'azote.
- avec :

. au moins un dérivé monosubstitué de formule :

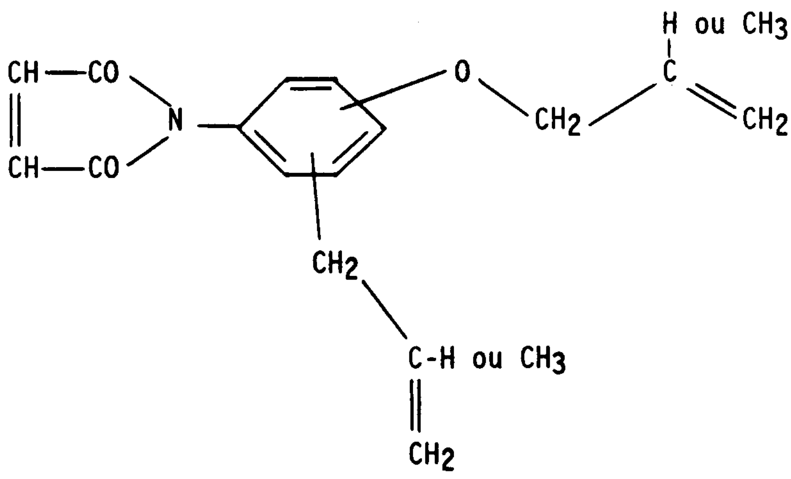

(IV)

. et éventuellement un ou plusieurs dérivés disubstitués de formule :

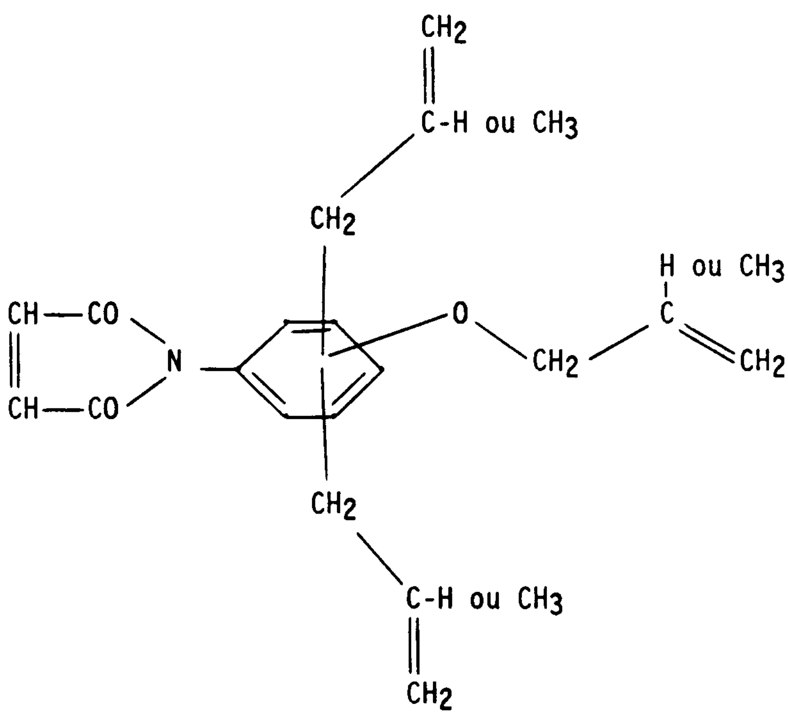

(V)

Les proportions des divers constituants du mélange des produits de formules (III), (IV) et éventuellement (V) peuvent varier dans de larges limites. De manière générale, les proportions des constituants sont choisies entre les limites suivantes (exprimant le pourcentage pondéral de chacun des constituants dans le mélange) :

- au moins 30 %, et de préférence de 50 % à 80 % de N-(méth)allyloxyphénylmaléimide de formule (III),
- de 5 % à 50 % et de préférence de 10 % à 35 % de dérivé(s) mono(méth)allyl substitué(s) de formle (IV),
- et de 0 % à 20 % et de préférence de 0 % à 15 % de dérivé(s) di(méth)allyl substitué(s) de formule (V),

la somme des constituants devant dans chaque cas être égale à 100 % en poids.

De manière avantageuse, on utilise comme composé comprenant un mélange de N-(méth)-allyloxyphénylmaléimide de formule (III) avec un ou plusieurs dérivés de substitution (méth)allylés de

formule(s) (IV) et éventuellement (V), le produit brut obtenu par mise en oeuvre du procédé original ci-après défini.

Ce procédé est caractérisé en ce qu'il consiste à réaliser les 3 étapes suivantes qui sont enchaînées dans le même réacteur :

- la première étape consiste à faire réagir en milieu solvant un aminophénol avec de l'anhydride maléique en opérant à une température allant de 20 °C à 200 °C, pendant une durée allant, selon la température choisie, de 30 minutes à 2 heures et elle conduit à un premier milieu réactionnel comprenant un acide N-(hydroxylphényl)maléamique ;
- la deuxième étape consiste à réaliser une réaction de (méth)allylation de l'acide précité en faisant réagir le premier milieu réactionnel précité avec un halogénure de (méth)allyle en opérant à un pH qui doit être ajusté et maintenu à une valeur constante comprise entre 7 et 14 par addition d'une quantité déterminée d'une solution aqueuse alcaline et à une température allant de 40 °C à 150 °C et elle conduit, après acidification et élimination de la phase aqueuse, à un second milieu réactionnel organique comprenant un acide N-[(méth)allyloxyphényl] maléamique, un ou plusieurs acides N-[-(méth)allyloxy,(méth)allyphényl] maléamiques et éventuellement un ou plusieurs acides N-[(méth)-allyloxy,di(méth)allylphényl]maléamiques ;
- la troisième étape consiste à réaliser une réaction de cyclisation des acides maléamiques précités en faisant réagir le second milieu réactionnel précité avec un anhydride d'acide carboxylique inférieur, en présence d'une amine tertiaire et éventuellement d'un catalyseur, puis à éliminer le solvant de la réaction et elle conduit à un produit brut de réaction qui est un composé comprenant un mélange formé de : au moins 30 % en poids et de préférence de 50 % à 80 % en poids de N-(méth)-allyloxyphénylmaléimide, de 5 % à 50 % en poids et de préférence de 10 % à 35 % en poids d'un ou plusieurs N-[(méth)allyloxy,(méth)allylphényl]maléimides et de 0 % à 20 % en poids et de préférence de 0 % à 15 % en poids d'un ou plusieurs N-[(méth)allyloxy,di(méth)allylphényl]-maléimides.

Les 3 étapes qui viennent d'être décrites sont enchaînées dans un solvant unique pour une plus grande simplicité du procédé, mais il est possible d'opérer un changement de solvant, au cours de telle ou telle étape, sans inconvénient. Le choix du solvant peut être très large, mais, comme la deuxième étape est réalisée en milieu biphasique hydro-organique, il peut être souhaitable de mettre en oeuvre un solvant organique non miscible à l'eau, ce qui simplifie considérablement le traitement de la masse réactionnelle. Parmi les solvants miscibles ou non miscibles à l'eau utilisables, on donnera en fait la préférence à ceux qui dissolvent, dans les conditions de température adoptées pour la synthèse, l'aminophénol de départ. Parmi ces solvants, on peut citer par exemple : les alcools (comme par exemple : méthanol, éthanol, butanol) ; les cétones (comme par exemple : acétone, méthyléthylcétone, méthylisobutylcétone) ; les nitriles (comme par exemple : benzonitrile, propionitrile, acétonitrile) ; les esters (comme par exemple : acétate d'éthyle, de butyle) ; des solvants aromatiques (comme par exemple : anisole, chlorobenzène) ; des hydrocarbures halogénés (comme par exemple : chloroforme, dichlorométhane, dichloroéthane).

S'agissant de la première étape du procédé, on peut dire que la concentration des réactifs de départ dans le solvant utilisé n'est pas critique. On n'a pas intérêt tout de même ni à trop diluer pour des raisons de productivité, ni à trop concentrer pour avoir une bonne agitabilité. Dans cette première étape l'anhydride maléique est utilisé en quantités au moins égales à une mole par mole d'aminophénol ; on utilise de préférence des quantités plus importantes qui vont de 1,01 à 1,5 moles par mole d'aminophénol. De plus la température se situe de préférence entre 40 °C et 60 °C.

S'agissant de la deuxième étape, on commence par ajouter dans le milieu réactionnel la quantité d'une solution aqueuse alcaline, par exemple d'une solution aqueuse de NaOH, nécessaire d'une part pour salifier l'acide N-(hydroxyphényl)maléamique et d'autre part pour obtenir le pH désiré. Le pH sera maintenu constant pendant toute la réaction par ajout de soude ; de manière préférentielle, le pH est ajusté et maintenu à une valeur constante comprise entre 10 et 12. La réaction d'allylation est réalisée de préférence avec le bromure ou le chlorure de (méth)allyle. La quantité d'halogénure de (méth)allyle va de 1,5 à 10 moles par groupement molaire OH phénolique et, de préférence, de 2 à 4. L'excès de ce réactif peut être récupéré en fin d'opération et recyclé dans une opération suivante. Le temps de coulée de l'halogénure de (méth)allyle n'est pas critique et il peut se situer dans l'intervalle allant de 1 heure à 5 heures, et, de préférence, allant de 2 heures à 4 heures. Dans cette deuxième étape, la température se situe de préférence entre 60 °C et 100 °C. A noter qu'en fin d'étape la phase aqueuse est acidifiée jusqu'à un pH environ égal à 1 par des acides habituels, de préférence des oxyacides ou des hydroacides minéraux. La couche aqueuse est éliminée et on laisse dans le réacteur la couche organique.

S'agissant de la troisième étape du procédé, on utilise, avantageusement comme anhydride d'acide carboxylique inférieur, l'anhydride acétique en quantités au moins égales à une mole par groupement

molaire HOOC-CH = CH-CO-NH- à cycliser. On utilise de préférence des quantités plus importantes qui vont de 1,05 à 1,5 moles par groupement maléamique.

Parmi les amines tertiaires convenables, on peut citer notamment les trialkylamines ainsi que les N,N-dialkylanilines dans lesquelles les radicaux alkyle ont de 1 à 12 atomes de carbone. La triéthylamine et la N,N-diméthyl-aniline sont d'un emploi avantageux. Les quantités d'amine tertiaire se situent entre 0,05 et 2 moles par groupement molaire HOOC-CH = CH-CO-NH-.

En tant que catalyseurs, on peut utiliser par exemple des sels de nickel d'acides carboxyliques, éventuellement hydratés ainsi que les formes chélatées de ce métal. L'acétate et l'acétylacétonate conviennent particulièrement bien. Ces catalyseurs sont employés en quantités très faibles allant de 0,05 à 1,5 g par groupement molaire HOOC-CH = CH-CO-NH- et, de préférence, allant de 0,1 à 0,8 g.

Dans cette troisième étape, la température n'est pas critique et n'a une incidence que sur la cinétique de la réaction. Cette température peut être comprise par exemple entre 40 ° C et 150 ° C et, de préférence, entre 60 ° C et 80 ° C. En fin de cette étape, le solvant est éliminé par distillation sous vide et on obtient le produit brut de réaction ayant l'aspect d'une huile.

Conformément à une modalité très préférée de mise en oeuvre de la présente invention, le procédé précité s'applique bien, au départ de métaaminophénol, à la préparation des composés comprenant des mélanges à base de :

N-[(méth)allyloxy-3 phényl]maléimide + N-[(méth)allyloxy-3 (méth)allyl-4 phényl]maléimide + N-[(méth)-allyloxy-3 (méth)allyl-6 phényl]maléimide + éventuellement N-[(méth)allyloxy-3 di(méth)allyl-4,6 phényl]-maléimide.

A noter qu'au départ d'orthoaminophénol, on est conduit à des composés comprenant des mélanges à base de :

N-[(méth)allyloxy-2 phényl]maléimide + N-[(méth)allyloxy-2 (méth)allyl-3 phényl]maléimide + N-[(méth)-allyloxy-2 (méth)allyl-5 phényl]maléimide + éventuellement N-[(méth)allyloxy-2 di(méth)allyl-3,5 phényl]-maléimide.

A noter encore qu'au départ de paraminophénol, on est conduit à des composés comprenant des mélanges à base de :

N-[(méth)allyloxy-4 phényl]maléimide + N-[(méth)allyloxy-4 (méth)allyl-3 phényl]maléimide + éventuellement N-[(méth)allyloxy-4 di(méth)allyl-3,5 phényl]maléimide.

En ce qui concerne le réactif (a), on peut citer, à titre d'exemples spécifiques de bis-imides de formule (I) qui conviennent, les composés indiqués dans la demande française 85/16971, c'est-à-dire :

- le N,N′-métaphénylène-bis-maléimide,
- le N,N′-paraphénylène-bis-maléimide,
- le N,N′-4,4′-diphénylméthane-bis-maléimide,
- le N,N′-4,4′-diphényléther-bis-maléimide,
- le N,N′-4,4′-diphénylsulphone-bis-maléimide,
- le N,N′-cyclohexylène-1,4-bis-maléimide,
- le N,N′-4,4′-diphényl-1,1 cyclohexane-bis-maléimide,
- le N,N′-4,4′-diphényl-2,2 propane-bis-maléimide,
- le N,N′-4,4′-triphénylméthane-bis-maléimide,
- le N,N′-méthyl-2 phénylène-1,3-bis-maléimide,
- le N,N′-méthyl-4 phénylène-1,3-bis-maléimide,
- le N,N′-méthyl-5 phénylène-1,3-bis-maléimide.

Ces bis-maléimides peuvent être préparés selon les procédés décrits dans le brevet américain n° 3 018 290 et le brevet anglais n° 1 137 290. On utilise de préférence, pour la mise en oeuvre de la présente invention, le N,N′-4,4′-diphénylméthane-bis-maléimide pris seul ou en mélange avec le N,N′-méthyl-2 phénylène-1,3-bis-maléimide, le N,N′-méthyl-4 phénylène-1,3-bis-maléimide, le N,N′-méthyl-5 phénylène-1,3-bis-maléimide.

En ce qui concerne le réactif aminé (b), il est choisi comme indiqué dans la demande française précitée parmi :

- l'allyloxy-2 aniline,
- l'allyloxy-3 aniline,
- l'allyloxy-4 aniline,
- le méthallyloxy-2 aniline,
- le méthallyloxy-3 aniline,
- le méthallyloxy-4 aniline,
- et leurs mélanges.

Ces composés peuvent être préparés selon les procédés décrits dans les références suivantes : Journal of American Chemical Society, 70, pages 592 à 594 (1948) : Chemical Abstracts, 51, 4423 C (1957) ; Journal of American Chemical Society, 44, pages 1741 à 1744 (1922) ; Bulletin de la Société Chimique de France 1962, pages 2154 à 2157.

Les quantités de N,N′-bis-imide(s) (a), de réactif aminé (b) et éventuellement de réactif copolymérisable (c) sont choisies de façon à ce que le rapport r :

$$\frac{\text{poids total des réactifs à groupements imides (a) + éventuellement (c)}}{\text{poids du réactif à groupement } NH_2 \text{ (b)}}$$

se situe dans l'intervalle allant de 0,5/l à 10/l et, de préférence, allant de 1/l à 5/l.

Par ailleurs, le poids de réactif copolymérisable (c), quand on choisit d'en utiliser un, représente jusqu'à 40 % du poids total des réactifs (a) + (b) + (c) et, de préférence se situe dans l'intervalle allant de 5 à 30 %.

Le composé imidazole (d) que l'on utilise pour la mise en oeuvre de la présente invention répond à la formule générale :

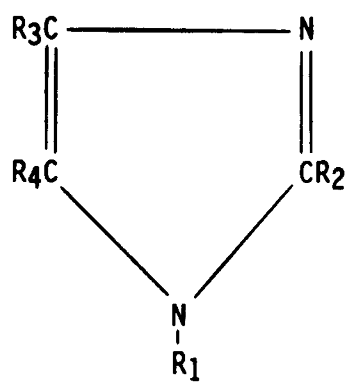

(VI)

dans laquelle $R_1$, $R_2$, $R_3$ et $R_4$, identiques ou différents, représentent chacun : un atome d'hydrogène, un radical alkyle ou alcoxy ayant de 1 à 20 atomes de carbone, vinyle, phényle, nitro, $R_3$ pouvant former avec $R_4$ et les atomes de carbone auxquels sont liés ces radicaux un cycle unique comme par exemple un cycle benzénique, $R_1$ pouvant également représenter un groupement carbonyle lié à un deuxième cycle imidazole.

Comme exemples spécifiques de composés imidazole (d), on peut citer en particulier : l'imidazole ou glyoxaline, le méthyl-1 imidazole, le méthyle-2 imidazole,le diméthyl-1,2 imidazole, le vinyl-1 imidazole, le vinyl-1 méthyl-2 imidazole, le benzimidazole, le carboxyldiimidazole.

Le composé imidazole est utilisé en quantités catalytiques. Selon la nature du composé imidazole et selon la vitesse de polymérisation souhaitée au stade de la mise en oeuvre, on utilise le composé imidazole à un taux se situant dans l'intervalle allant de 0,01 à 1 % en poids par rapport à l'ensemble des réactifs (a) + (b) + éventuellement (c) et, de préférence, allant de 0,05 à 0,5 %.

Les conditions générales pour mettre en pratique la présente invention sont celles décrites dans la demande française précitée et rappelée ci-après.

Les polymères peuvent être préparés par chauffage direct du ou des bis-imide(s) (a), du réactif aminé (b) et éventuellement du réactif (c) avec le composé imidazole (d) au moins jusqu'à l'obtention d'un mélange liquide homogène. La température peut varier en fonction de l'état physique des composés en présence mais elle se situe entre 50 °C et 300 °C. Il est avantageux d'amener et de maintenir les composés de départ dans un état de mélange intime avant et pendant le chauffage à l'aide par exemple d'une bonne agitation. Le composé imidazole (d) est de préférence ajouté au départ dans le mélange bien agité des réactifs (a) et (b). Lorsque ce composé est particulièrement actif, pour éviter son encapsulation dans le réseau polymère engendré, il est souhaitable de l'ajouter dans un solvant ou diluant compatible avec le milieu réactionnel ; on a trouvé qu'il pouvait être intéressant d'utiliser comme solvant ou diluant, soit le réactif aminé (b) lui-même, soit un des liquides organiques polaires dont on parle ci-après.

La préparation des polymères peut aussi être effectuée par chauffage du mélange des réactifs au sein d'un diluant organique qui est liquide dans une partie au moins de l'intervalle 50 °C - 250 °C. Parmi ces diluants, on peut mentionner en particulier des hydrocarbures aromatiques comme les xylènes et le toluène, des hydrocarbures halogénés comme les chlorobenzènes, des solvants polaires comme le dioxanne, le tétrahydrofuranne et l'oxyde de dibutyle, le diméthylformamide, le diméthylsulfoxyde, la N-méthylpyrrolidone, le diméthylacétamide, le méthylglycol et la méthyl-éthyl-cétone. Les solutions ou suspensions de polymères peuvent être utilisées telles quelles pour de nombreux emplois ; on peut également isoler les polymères, par exemple par filtration, éventuellement après précipitation au moyen d'un diluant organique miscible avec le solvant utilisé. Dans ce contexte, on peut utiliser avantageusement un hydrocarbure dont le point d'ébullition ne dépasse pas notablement 120 °C.

Il doit être compris que les propriétés des polymères qui sont préparés dans le cadre de l'invention peuvent varier dans une large mesure en fonction notamment de la nature exacte des réactifs engagés, des proportions de réactifs choisies et des conditions précises de température adoptées dans l'intervalle précédemment mentionné. En ce qui concerne la nature des polymères qui sont préparés, ceux-ci peuvent être des polymères durcis, insolubles dans les solvants usuels tels que par exemple les composés polaires cités dans le paragraphe précédent et ne présentant pas de ramollissement notable au-dessous de la température à laquelle ils commencent à se dégrader.

Mais ces polymères peuvent également se présenter sous l'aspect de prépolymères (P) solubles dans les solvants organiques polaires et présentant un point de ramollissement à une température inférieure à 200 °C [en général ce point de ramollissement est compris entre 50° et 150 °C]. Ces prépolymères peuvent être obtenus en masse en chauffant le mélange des réactifs jusqu'à l'obtention d'un produit homogène ou pâteux à une température située entre 50° et 180 °C pendant une durée qui est d'autant plus brève que la température adoptée est plus élevée. Avant de soumettre le mélange des réactifs au chauffage, il est avantageux là aussi d'en effectuer par agitation un mélange intime préalable. Il existe là aussi une méthode préférée de mise en oeuvre du composé imidazole (d) et il s'agit de celle indiquée ci-avant à propos de la préparation directe de polymères durcis. La préparation des prépolymères peut également être effectuée en suspension ou en solution dans un diluant qui est liquide dans une partie au moins de l'intervalle 50° - 180 °C.

Dans le cas où l'on choisit de faire appel au réactif facultatif (c), il faut noter que ces prépolymères (P) peuvent également être obtenus en formant, à partir du ou des bis-imide(s) (a) et du réactif (c), un prépolymère (PP) qui est ensuite mis à réagir avec le réactif aminé (b) et le composé imidazole (d). On peut encore préparer au préalable un prépolymère (P'P') en chauffant le mélange de réactif aminé (b), de réactif (c) et de composé imidazole (d), puis en le faisant réagir avec le ou les bis-imide(s) (a) pour obtenir le prépolymère (P). Les conditions de température et de durée utilisées pour la préparation des prépolymères (PP) ou (P'P') et pour leur transformation en prépolymères (P) sont celles indiquées ci-avant à propos de la préparation des prépolymères (P) par mélange direct des réactifs (a), (b) et éventuellement (c) avec le composé imidazole (d).

Les prépolymères (P) peuvent être utilisés à l'état de masse liquide, une simple coulée à chaud suffisant pour la mise en forme et la réalisation d'objets moulés. On peut aussi, après refroidissement et broyage, les utiliser sous la forme de poudres qui se prêtent remarquablement aux opérations de moulage par compression, éventuellement en présence de charges à l'état de poudres, de sphères, de granules, de fibres ou de paillettes. Sous la forme de suspensions ou de solutions, les prépolymères (P) peuvent être utilisés pour la réalisation de revêtements et d'articles intermédiaires préimprégnés dont l'armature peut être constituée par des matières fibreuses à base de silicate ou d'oxyde d'aluminium ou de zirconium, de carbone, de graphite, de bore, d'amiante ou de verre. On peut encore utiliser ces prépolymères (P) pour la réalisation de matériaux cellulaires après incorporation d'un agent porogène tel que par exemple l'azodicarbonamide.

Dans un second stade, les prépolymères (P) peuvent être durcis par chauffage jusqu'à des températures au plus égales à 300 °C et plus précisément comprises entre 150° et 300 °C ; une mise en forme complémentaire peut être effectuée pendant le durcissement, éventuellement sous vide ou sous une pression super-atmosphérique, ces opérations pouvant également être consécutives.

Dans le cas où l'on choisit de faire appel au réactif facultatif (c), on ne sort pas du cadre de l'invention si l'on prépare des polymères qui ne sont pas sous l'aspect de prépolymères (P), en utilisant un mélange intime de prépolymère (PP), de réactif aminé (b) et de composé imidazole (d) ou un mélange intime de prépolymère (P'P') et de bis-imide(s) que l'on chauffe en masse dans les conditions décrites précédemment.

Les polymères selon l'invention intéressent les domaines de l'industrie qui requièrent des matériaux doués de bonnes propriétés mécaniques et électriques ainsi que d'une grande inertie chimique à des

températures de 200° à 300°C. A titre d'exemples, ils conviennent pour la fabrication d'isolants en plaques ou tubulaires pour transformateurs électriques, de supports de circuits imprimés, de pignons, de bagues. Les articles préimprégnés sont utilisables pour la réalisation des pièces ayant des formes et des fonctions variées dans de nombreuses industries comme par exemple dans l'aéronautique. Ces pièces, appelées stratifiés, qui peuvent être des pièces de révolution sont obtenues par placage de plusieurs couches de préimprégnés sur une forme ou un support. On peut utiliser aussi les préimprégnés comme renforts ou comme moyen de réparation de pièces détériorées. On rappellera que pour faire par exemple des objets moulés, il est possible de partir, soit du mélange des réactifs, soit d'un prépolymère (P). Quand on part directement du mélange des réactifs, on donne à ce mélange la forme de l'objet désiré et on effectue ensuite le durcissement par chauffage. Quand on part du prépolymère (P), il peut être moulé par simple coulée à chaud ou par injection et on provoque ensuite son durcissement par chauffage.

Les exemples suivants sont donnés à titre illustratif, mais non limitatif.

EXEMPLE 1 :

Dans un réacteur en verre, muni d'un agitateur en acier inoxydable de type ancre et d'une tubulure latérale permettant le départ des produits volatils, on introduit à température ambiante le mélange constitué de 12 g d'allyloxy-3 aniline et de 0,07 g d'imidazole.

On plonge le réacteur dans un bain d'huile préchauffé à 160°C. Après 2 minutes, on additionne sous agitation durant 3 minutes 58 g de N,N-4,4′-diphénylméthane-bis-maléimide [le rapport r est égal ici a 4,8/l]. La masse réactionnelle est alors laissée sous agitation pendant 13 autres minutes, dont les 3 dernières se passent sous une pression réduite de 1 300 Pa.

On coule ensuite la masse réactionnelle dans un moule préchauffé à 150°C. On peut ainsi préparer des plaques de dimensions 140 x 100 x 4 mm qui vont subir le cycle de cuisson suivant :

. 60 minutes à 150°C
. 50 minutes entre 150°C et 200°C
. 2 heures à 200°C
. 50 minutes entre 200°C et 250°C
. 16 heures à 250°C
. et 2 heures entre 250°C et 25°C.

Après démoulage, les plaques à base de polymère durci sont découpées pour obtenir des éprouvettes de dimensions 30 x 7 x 4 mm sur lesquelles on mesure la résistance à la rupture (Rf) et le module (Mf) en flexion à 25°C et à 250°C (appareil INSTRON avec distance entre appuis de 25,4mm):

- à 25°C : Rf = 209 MPa
  Mf = 3 240 MPa
- à 250°C : Rf = 123 MPa
  Mf = 2 510 MPa.

Avant durcissement, le prépolymère refroidi et broyé se présente sous la forme d'une poudre jaune possédant les caractéristiques suivantes : point de ramollissement : 54°C soluble à 50 % en poids dans la N-méthylpyrrolidone.

EXEMPLE 2 :

Dans le réacteur utilisé dans l'exemple 1, on introduit à température ambiante le mélange constitué de 2,42 g d'allyloxy-3 aniline et de 0,01 g d'imidazole. On plonge le réacteur dans un bain à 160°C et on ajoute en une minute 7,58 g de N,N′-4,4′-diphénylméthane-bis-maléimide [le rapport r est égal ici à 3,1/l]. Après 10 minutes de réaction, la masse réactionnelle est refroidie, puis broyée. Le prépolymère ainsi obtenu possède un point de ramollissement de 48,6°C ; il est soluble à 50 % en poids dans la N-méthylpyrrolidone et le collodion obtenu est stable pendant au moins 2 semaines à 25°C, au sens que l'on ne constate pas de reprécipitation du prépolymère pendant cette période. Le temps de gel du prépolymère à 160°C est de 14,4 minutes ; il est mesuré à l'aide d'un appareil SUNSHINE sur un mélange de 10 g des réactifs de départ : le temps zéro est défini par la plongée du tube contenant ce mélange dans un bain thermostaté à la température de mesure.

A titre d'essai comparatif, on a reproduit les opérations décrites ci-avant, mais en n'utilisant pas cette fois de composé imidazole. Pour atteindre un point de ramollissement de 45°C, il faut alors 30 à 35 minutes de réactions à 160°C. Le collodion à base de 50 % en poids de prépolymère dans la N-méthylpyrrolidone devient louche au bout de environ 30 minutes. Le temps de gel du prépolymère à 160°C est de 1 heure 5 minutes.

EXEMPLE 3 :

Avec le prépolymère conforme à l'exemple 1 précité, on prépare un collodion contenant 50 % en poids de prépolymère dans de la N-méthylpyrrolidone. On utilise ce collodion pour enduire un tissu de verre fabriqué par la Société PORCHER sous la référence 7628 dont le grammage est de 200 g/$m^2$ et ayant subi un traitement par le gamma-aminopropyltriéthoxysilane A 1100 d'UNION CARBIDE. Le tissu imprégné est séché en atmosphère ventilée à 140 °C pendant 10 minutes. On découpe ensuite 6 rectangles (145 x 100 mm) que l'on empile avec deux feuilles de cuivre de 35 micromètres d'épaisseur placées sur les deux faces extérieures de l'empilement et on place l'ensemble entre les plateaux d'une presse dans les conditions suivantes : chauffage 15 minutes à 160 °C, puis 1 heure 15 minutes à 180 °C sous $40.10^5$ Pa ; et 16 heures à 200 °C sous pression atmosphérique.

On examine l'adhérence du cuivre sur le stratifié à 6 plis préparé : cette adhérence, mesurée au dynamomètre INSTRON par traction du cuivre à 90 ° d'angle (selon la norme MIL P 55 617 B avec une vitesse de traction de 55 mm/min) est de l'ordre de 17,6 N/cm.

## Revendications

1. Procédé de préparation de polymères à groupements imides se trouvant sous forme de polymères durcis, insolubles dans les solvants organiques polaires consistant dans le dioxanne, le tétrahydrofuranne, l'oxyde de dibutyle, le diméthylformamide, le diméthylsulfoxyde, la N-méthylpyrrolidone, le diméthylacétamide, le méthylglycol et la méthyléthyl-cétone et ne présentant pas de ramollissement notable au-dessous de la température à laquelle ils commencent à se dégrader, qui consiste à chauffer directement à une température comprise entre 50 °C et 300 °C le mélange des réactifs suivants :

   (a) un N,N'-bis-imide ou une association de plusieurs bis-imides de formule :

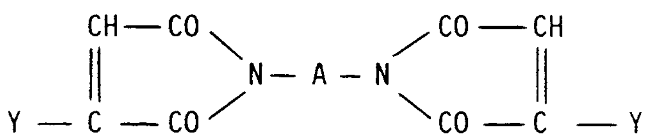

(I)

   dans laquelle :

   . le symbole Y représente H, $CH_3$ ou Cl

   . le symbole A représente un radical divalent choisi dans le groupe constitué par les radicaux : cyclohexylènes ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule :

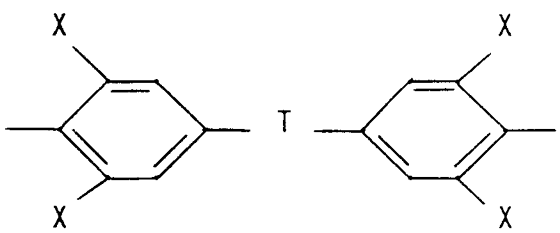

   dans laquelle T représente un lien valentiel simple ou un groupement :

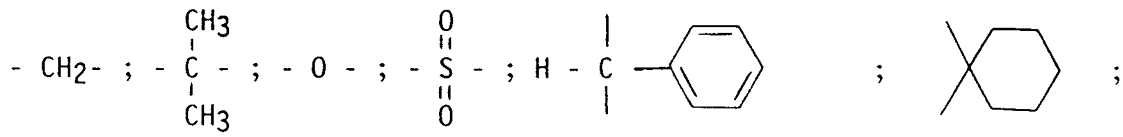

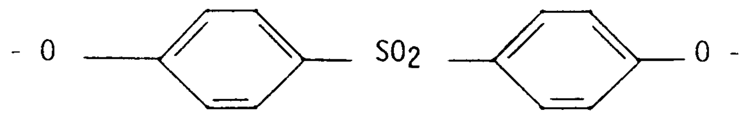

et X représente un atome d'hydrogène, un radical méthyle, éthyle ou isopropyle ;
(b) une ou plusieurs alkényloxyanilines de formule :

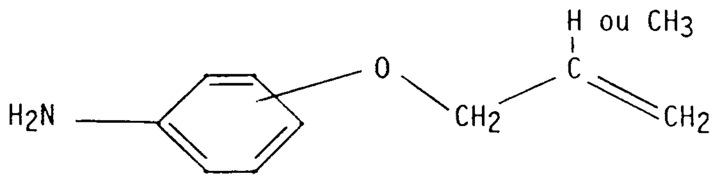
(II)

éventuellement (c) un réactif copolymérisable qui consiste :

- soit dans un ou plusieurs monomères de formule :

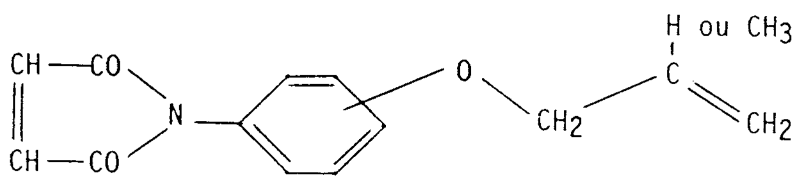
(III)

  dans laquelle le radical allyloxy ou méthallyloxy est en position ortho, méta ou para par rapport à l'atome de carbone du cycle benzénique relié à l'azote ;
- soit dans le composé comprenant :
  * un mélange d'un monomère de formule :

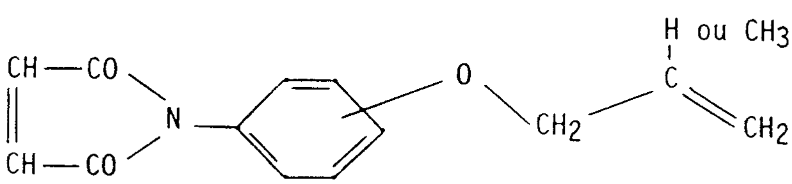
(III)

dans laquelle le radical allyloxy ou méthallyloxy est en position ortho, métha ou para par rapport à l'atome de carbone du cycle benzénique relié à l'azote.

  * avec :

. au moins un dérivé monosubstitué de formule :

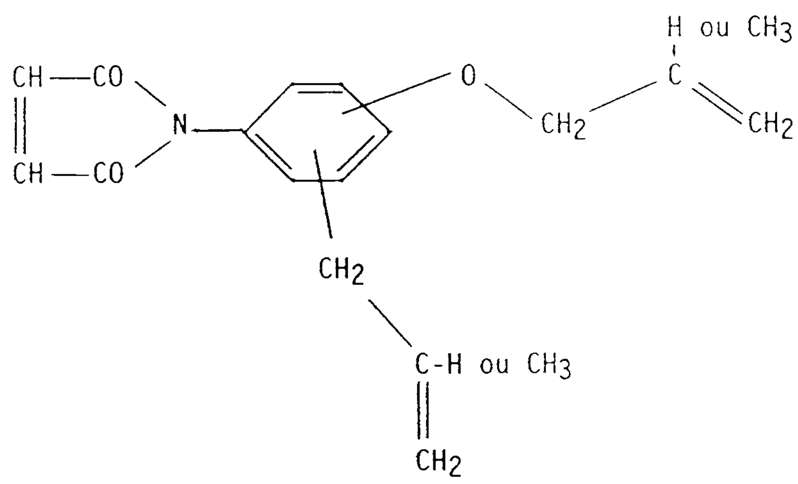

(IV)

. et éventuellement un ou plusieurs dérivés disubstitués de formule :

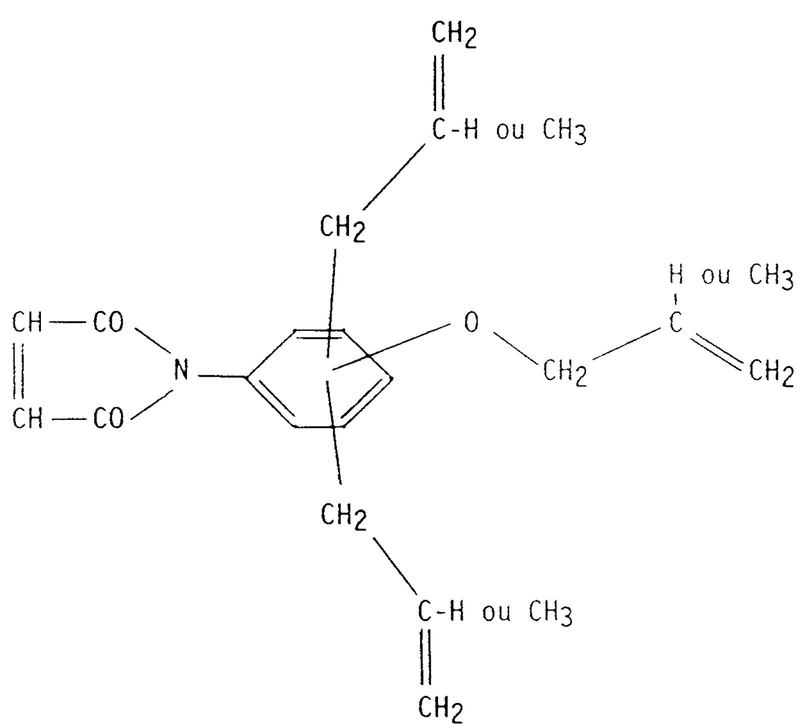

(V),

les quantités de N,N'-bis-imide(s) (a), de réactif aminé (b) et eventuellement de réactif copolymérisable (c) étant choisies de façon à ce que le rapport r :

$$\frac{\text{poids total des réactifs à groupements imide (a) + éventuellement (c)}}{\text{poids du réactif à groupement } NH_2 \text{ (b)}}$$

se situe dans l'intervalle allant de 0,5/1 à 10/1 et

le poids de réactif copolymérisable (c), quand on choisit d'en utiliser un, représente jusqu'à 40 % du poids total des réactifs (a) + (b) + (c),

ledit procédé étant caractérisé en ce que la polymérisation est réalisée en présence d'un composé imidazole (d) répondant à la formule générale

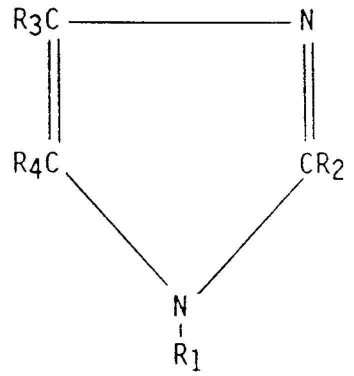

(VI)

dans laquelle $R_1$, $R_2$, $R_3$ et $R_4$, identiques ou différents, représentent chacun : un atome d'hydorgène, un radical alkyle ou alcoxy ayant de 1 à 20 atomes de carbone, vinyle, phényle, nitro $R_3$ pouvant former avec $R_4$ et les atomes de carbone auxquels sont liés ces radicaux un cycle unique,

$R_1$ pouvant également représenter un groupement carbonyle lié à un deuxième cycle imidazole, et la quantité de composé imidazole (d) se situe dans l'intervalle allant de 0,01 à 1 % en poids par rapport à l'ensemble des réactifs (a) + (b) + éventuellement (c).

**2.** Procédé selon la revendication 1, caractérisé en ce que l'on utilise, comme composé comprenant un mélange de N-(méth)allyloxyphénylmaléimide de formule (III) avec un ou plusieurs dérivés de substitution (méth)allylés de formule (IV) et éventuellement (V), le produit brut obtenu par mise en oeuvre du procédé qui consiste à réaliser les 3 étapes suivantes qui sont enchaînées dans le même réacteur :
- la première étape consiste à faire réagir en milieu solvant un aminophénol avec de l'anhydride maléique en opérant à une température allant de 20 °C à 200 °C, pendant une durée allant, selon la température choisie, de 30 minutes à 2 heures et elle conduit à un premier milieu réactionnel comprenant un acide N-(hydroxylphényl)maléamique ;
- la deuxième étape consiste à réaliser une réaction de (méth)allylation de l'acide précité en faisant réagir le premier milieu réactionnel précité avec un halogénure de (méth)allyle en opérant à un pH qui doit être ajusté et maintenu à une valeur constante comprise entre 7 et 14 par addition d'une quantité déterminée d'une solution aqueuse alcaline et à une température allant de 40 °C à 150 °C et elle conduit, après acidification et élimination de la phase aqueuse, à un second milieu réactionnel organique comprenant un acide N-[(méth)allyloxyphényl] maléamique, un ou plusieurs acides N-[(méth)allyloxy,(méth)allyphényl] maléamiques et éventuellement un ou plusieurs acides N-[(méth)allyloxy, di(méth)allylphényl]maléamiques ;
- la troisième étape consiste à réaliser une réaction de cyclisation des acides maléamiques précités en faisant réagir le second milieu réactionnel précité avec un anhydride d'acide carboxylique inférieur, en présence d'une amine tertiaire et éventuellement d'un catalyseur, puis à éliminer le solvant de la réaction et elle conduit à un produit brut de réaction qui est un composé comprenant un mélange formé de : au moins 30 % en poids et de préférence de 50 % à 80 % en poids de N-(méth)allyloxyphénylmaléimide, de 5 % à 50 % en poids et de préférence de 10 % à 35 % en poids d'un ou plusieurs N-[(méth)allyloxy,(méth)allylphényl]maléimides et de 0 % à 20 % en poids et de préférence de 0 % à 15 % en poids d'un ou plusieurs N-[(méth)-allyloxy,di(méth)allylphényl]maléimides.

**3.** Procédé de préparation de polymères à groupements imides se trouvant sous forme de prépolymères thermodurcissables (P) solubles dans les solvants organiques polaires définis ci-avant dans la revendication 1 et présentant un point de ramollissement à une température inférieure à 200 °C, caractérisé par le fait que l'on chauffe directement le mélange des réactifs (a), (b), éventuellement (c), et (d) définis ci-avant dans l'une quelconque des revendications 1 ou 2 à une température comprise entre 50 °C et 180 °C jusqu'à l'obtention d'un produit homogène liquide ou pâteux.

**4.** Procédé selon la revendication 1, caractérisé en ce qu'il consiste à chauffer le mélange des réactifs entre 50 °C et 180 °C pour former dans un premier temps un prépolymère (P), puis à provoquer le durcissement du prépolymère (P) par chauffage à une température comprise entre 150 °C et 300 °C.

5. Procédé selon la revendication 3 ou 4, caractérisé en ce que, lorsque l'on fait appel au réactif facultatif (c), il consiste à former, à partir du ou des bis-imide(s) (a) et du réactif (c), un prépolymère (PP), puis à chauffer ce prépolymère (PP) avec le réactif aminé (b) et le composé imidazole (d) pour obtenir le prépolymère (P).

6. Procédé selon la revendication 3 ou 4, caractérisé en ce que, lorsque l'on fait appel au réactif facultatif (c), il consiste à former, à partir du réactif aminé (b), du réactif (c) et du composé imidazole (d), un prépolymère (P'P'), puis à chauffer ce prépolymère (P'P') avec le ou les bis-imide(s) (a) pour obtenir le prépolymère (P).

7. Procédé selon la revendication 1, caractérisé en ce que le composé imidazole (d) est choisi dans le groupe formé par l'imidazole ou glyoxaline, le méthyl-1 imidazole, le méthyl-2 imidazole, le diméthyl-1,2 imidazole, le vinyl-1 imidazole, le vinyl-1 méthyl-2 imidazole et le benzimidazole et le carbonyldiimidazole.

8. Procédé selon la revendication 1, caractérisé en ce que d'une part les quantités de N,N'-bis-imide(s) (a), de réactif aminé (b) et éventuellement de réactif copolymérisable (c) sont choisies de façon à ce que le rapport r :

$$\frac{\text{poids total des réactifs à groupements imide (a) + éventuellement (c)}}{\text{poids du réactif à groupement } NH_2 \text{ (b)}}$$

se situe dans l'intervalle allant de 1/1 à 5/1, et d'autre part, le poids de réactif copolymérisable (c) , quand on choisit d'en utiliser un, se situe dans l'intervalle allant de 5 à 30 % du poids total des réactifs (a) + (b) + (c), et enfin la quantité de composé imidazole (d) se situe dans l'intervalle allant de 0,05 à 0,5 % en poids par rapport à l'ensemble des réactifs a) + (b) + éventuellement (c).

## Claims

1. Process for the preparation of polymers containing imide groups which are found in the form of hardened polymers, insoluble in polar organic solvents consisting of dioxane, tetrahydrofuran, dibutyl ether, dimethylformamide, dimethyl sulphoxide, N-methylpyrrolidone, dimethylacetamide, methyl glycol and methyl ethyl ketone and which do not show significant softening below the temperature at which they begin to degrade, which consists in heating the mixture of the following reactants directly to a temperature between 50 ° C and 300 ° C:
(a) an N,N'-bisimide or a combination of a number of bisimides of formula:

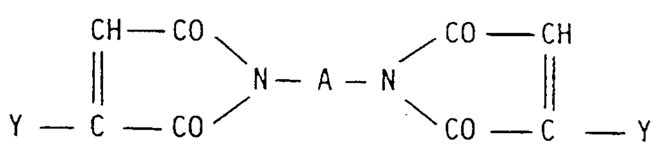

(I)

in which:

- the symbol Y represents H, $CH_3$ or Cl
- the symbol A represents a divalent radical chosen from the group consisting of the radicals: cyclohexylene, phenylene, 4-methyl-1,3-phenylene, 2-methyl-1,3-phenylene, 5-methyl-1,3-phenylene, 2,5-diethyl-3-methyl-1,4-phenylene, and the radicals of formula:

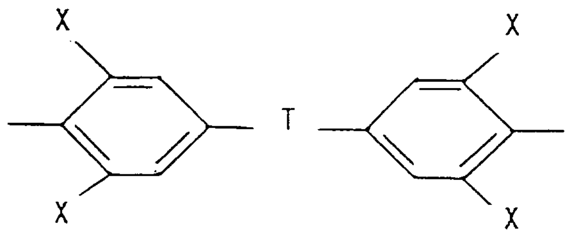

in which T represents a single valency bond or a group:

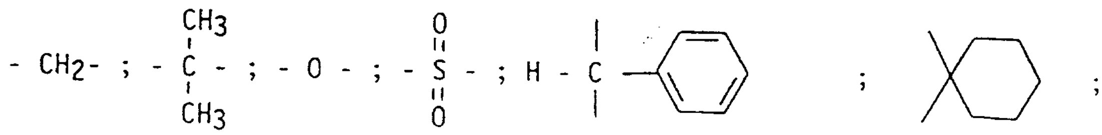

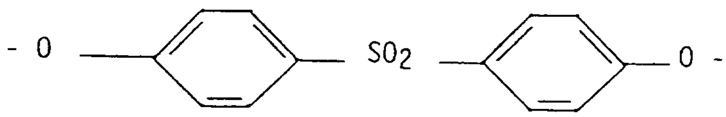

and X represents a hydrogen atom, or a methyl, ethyl or isopropyl radical;
(b) one or a number of alkenyloxyanilines of formula:

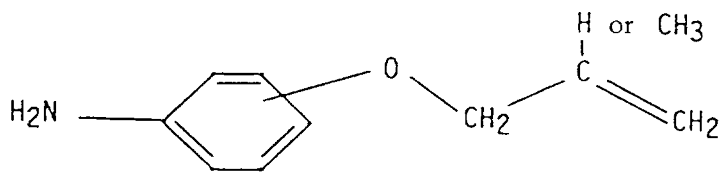 (II)

(c) optionally a copolymerizable reactant which consists:

- either of one or a number of monomers of formula:

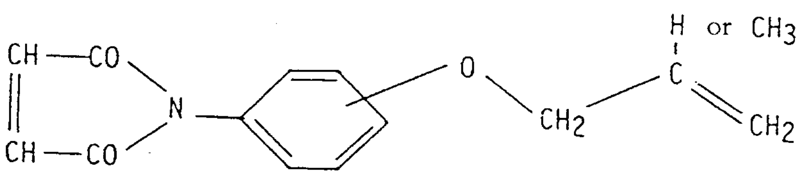 (III)

in which the allyloxy or methallyloxy radical is in the ortho, meta or para position with respect to the carbon atom of the benzene ring connected to the nitrogen;

- or of the compound comprising:
  * a mixture of a monomer of formula:

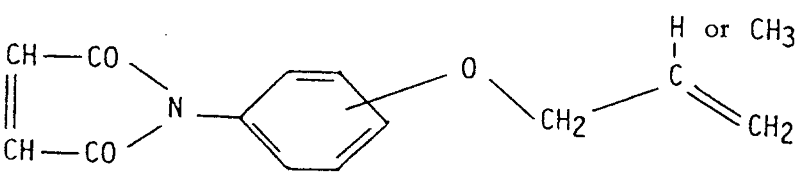 (III)

in which the allyloxy or methallyloxy radical is in the ortho, meta or para position with respect to the carbon atom of the benzene ring connected to the nitrogen.

* with:

- at least one monosubstituted derivative of formula:

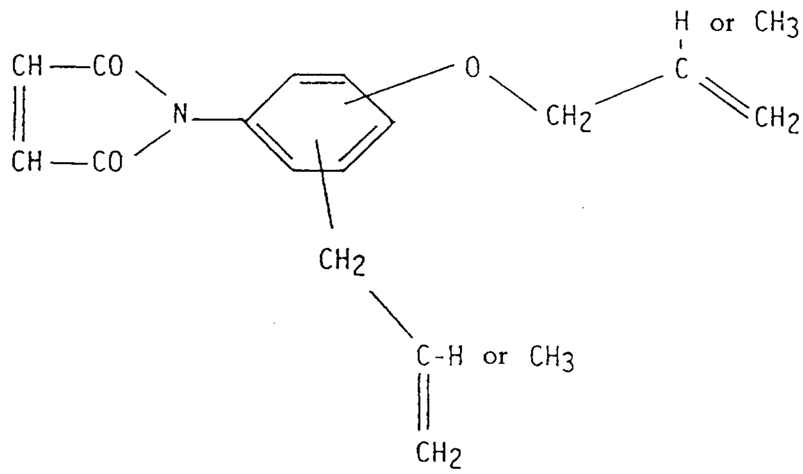

(IV)

- and optionally one or a number of disubstituted derivatives of formula:

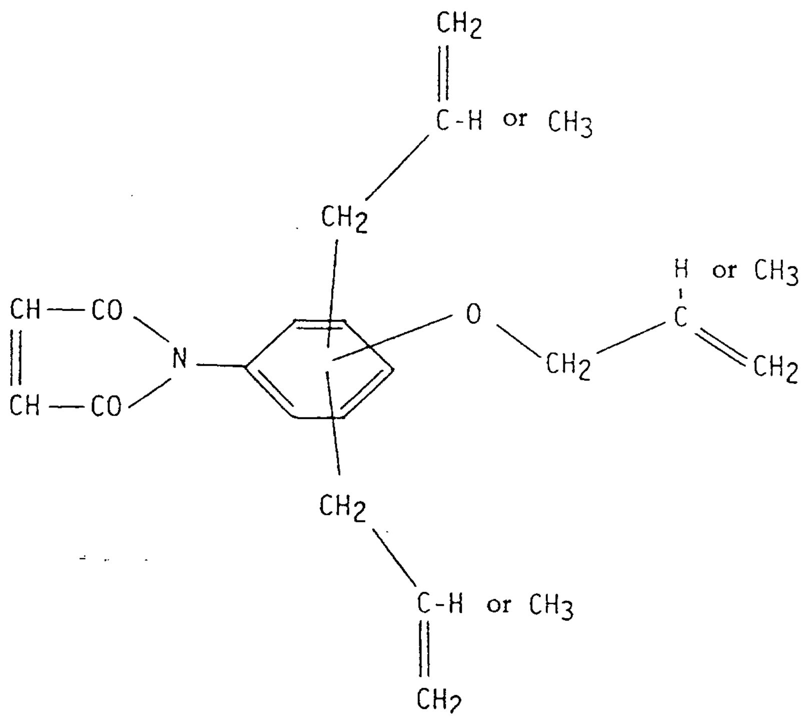

(V),

the amounts of N,N'-bisimide(s) (a), of amino reagent (b) and optionally of copolymerizable reactant (c) being chosen so that the ratio r:

$$\frac{\text{total weight of the reactants containing imide (a) + optionally (c) groups}}{\text{weight of the reactant containing } NH_2 \text{ group (b)}}$$

is in the interval ranging from 0.5/1 to 10/1 and the weight of copolymerizable reactant (c), when it is chosen to use one of them, represents up to 40 % of the total weight of the reactants (a) + (b) + (c),

the said process being characterized in that the polymerization is carried out in the presence of an imidizole compound (d) corresponding to the general formula

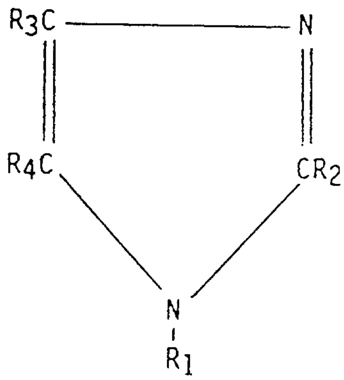

(VI)

in which $R_1$, $R_2$, $R_3$ and $R_4$, which are identical or different, each represent: a hydrogen atom or an alkyl or alkoxy, having from 1 to 20 carbon atoms, vinyl, phenyl or nitro radical, it being possible for $R_3$ to form, with $R_4$ and the carbon atoms to which these radicals are linked, a single ring,
it also being possible for $R_1$ to represent a carbonyl group linked to a second imidazole ring, and the amount of imidazole compound (d) is in the interval ranging from 0.01 to 1 % by weight with respect to all the reactants (a) + (b) + optionally (c).

**2.** Process according to Claim 1, characterized in that there is used, as compound comprising a mixture of N-(meth)allyloxyphenylmaleimide of formula (III) with one or a number of (meth)allylated substitution derivatives of formula (IV) and optionally (V), the crude product obtained by using the process which consists in carrying out the three following stages which follow on from each other in the same reactor:
- the first stage consists in reacting, in a solvent medium, an aminophenol with maleic anhydride, the reaction being carried out at a temperature ranging from 20°C to 200°C, for a period ranging, depending on the temperature chosen, from 30 minutes to 2 hours and it leads to a first reaction mixture comprising an N-(hydroxyphenyl)maleamic acid;
- the second stage consists in carrying out a (meth)allylation reaction of the abovementioned acid by reacting the first abovementioned reaction mixture with a (meth)allyl halide, the reaction being carried out at a pH which must be adjusted to and maintained at a constant value between 7 and 14 by addition of a specific amount of an alkaline aqueous solution and at a temperature ranging from 40° to 150°C and it leads, after acidification and removal of the aqueous phase, to a second organic reaction mixture comprising an N-[(meth)allyloxyphenyl]maleamic acid, one or a number of N-[((meth)allyloxy)((meth)allyl)phenyl]maleamic acids and optionally one or a number of N-[((meth)allyloxy)di((meth)allyl)phenyl]maleamic acids;
- the third stage consists in carrying out a cyclization reaction of the abovementioned maleamic acids by reacting the second abovementioned reaction mixture with a lower carboxylic acid anhydride, in the presence of a tertiary amine and optionally of a catalyst, in then removing the reaction solvent and it leads to a crude reaction product which is a compound comprising a mixture formed from: at least 30 % by weight and preferably from 50 % to 80 % by weight of N-(meth)allyloxyphenylmaleimide, from 5 % to 50 % by weight and preferably from 10 % to 35 % by weight of one or a number of N-[((meth)allyloxy)((meth)allyl)phenyl] maleimides and from 0 % to 20 % by weight and preferably from 0 % to 15 % by weight of one or a number of N-[((meth)-allyloxy)di((meth)allyl)phenyl]maleimides.

**3.** Process for the preparation of polymers containing imide groups which are found in the form of prepolymers (P), which can thermoset, which are soluble in the polar organic solvents defined above in Claim 1, and which have a softening point at a temperature below 200°C, characterized in that the mixture of the reactants (a), (b), optionally (c), and (d) defined above in either of Claims 1 or 2 is heated directly to a temperature between 50°C and 180°C until a liquid or pasty homogeneous product is obtained.

4. Process according to Claim 1, characterized in that it consists in heating the mixture of reactants between 50 °C and 180 °C to form, in a first step, a prepolymer (P), and in then causing hardening of the prepolymer (P) by heating to a temperature between 150 °C and 300 °C.

5. Process according to Claim 3 or 4, characterized in that, when the optional reactant (c) is resorted to, it consists in forming, from the bisimide(s) (a) and the reactant (c), a prepolymer (PP), and in then heating this prepolymer (PP) with the amino reactant (b) and the imidizole compound (d) to obtain the prepolymer (P).

6. Process according to Claim 3 or 4, characterized in that, when the optional reactant (c) is resorted to, it consists in forming, from the amino reactant (b), the reactant (c) and the imidazole compound (d), a prepolymer (P'P'), and in then heating this prepolymer (P'P') with the bisimide(s) (a) to obtain the prepolymer (P).

7. Process according to Claim 1, characterized in that the imidazole compound (d) is chosen from the group formed by imidazole or glyoxaline, 1-methylimidazole, 2-methylimidazole, 1,2-dimethylimidazole, 1-vinylimidazole, 1-vinyl-2-methylimidazole and benzimidazole and carbonyldiimidazole.

8. Process according to Claim 1, characterized in that, on the one hand, the amounts of N,N'-bisimide(s) (a), amino reactant (b) and optionally copolymerizable reactant (c) are chosen so that the ratio r:

$$\frac{\text{total weight of the reactants containing imide (a) + optionally (c) groups}}{\text{weight of the reactant containing } NH_2 \text{ group (b)}}$$

is in the interval ranging from 1/1 to 5/1 and, on the other hand, the weight of copolymerizable reactant (c), when it is chosen to use one of them, is in the interval ranging from 5 to 30 % of the total weight of the reactants (a) + (b) + (c), and finally the amount of imidazole compound (d) is in the interval ranging from 0.05 to 0.5 % by weight with respect to all the reactants (a) + (b) + optionally (c).

**Patentansprüche**

1. Verfahren zur Herstellung von Polymeren mit Imidgruppen, die sich in Form der gehärteten Polymeren,unlöslich in den polaren organischen Lösungsmitteln bestehend aus Dioxan, Tetrahydrofuran, Dibutylether, Dimethylformamid, Dimethylsulfoxid, N-Methylpyrrolidon, Dimethylacetamid, Methylglykol und Methylethylketon befinden, und keine merkliche Erweichung unterhalb der Temperatur, bei der sie sich abzubauen beginnen, aufweisen, das darin besteht, auf eine Temperatur zwischen 50 °C und 300 °C das Gemisch der folgenden Reaktionsteilnehmer direkt zu erhitzen:
(a) ein N,N'-Bisimid oder eine Assoziation mehrerer Bisimide der Formel

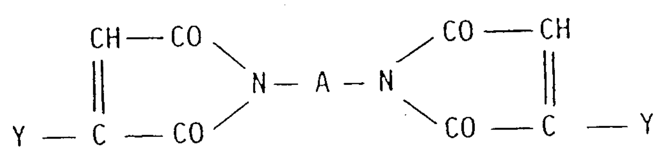

(I)

worin:
- das Symbol Y H, $CH_3$ oder Cl bedeutet,
- das Symbol A einen zweiwertigen Rest bedeutet, ausgewählt aus der Gruppe bestehend aus den Resten: Cyclohexylen, Phenylen, 4-Methyl-1,3-phenylen, 2-Methyl-1,3-phenylen, 5-Methyl-1,3-phenylen, 2,5-Diethyl-3-methyl-1,4-phenylen, und den Resten der Formel

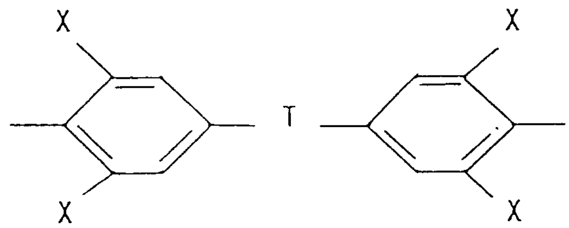

worin T eine einfache Valenzbindung oder eine Gruppe

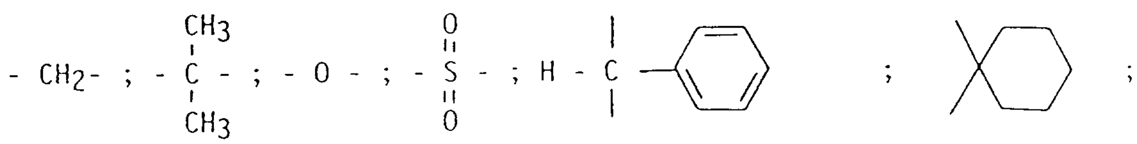

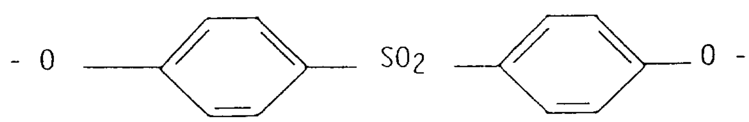

darstellt, und X ein Wasserstoffatom, einen Methyl-, Ethyl- oder Isopropylrest bedeutet;
(b) ein oder mehrere Alkenyloxyaniline der Formel

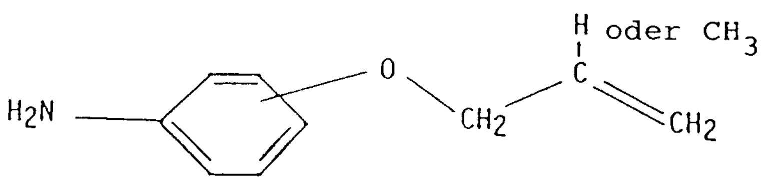

(II)

gegebenenfalls (c) ein copolymerisierbarer Reaktionsteilnehmer, der besteht aus:

- entweder einem oder mehreren Monomeren der Formel

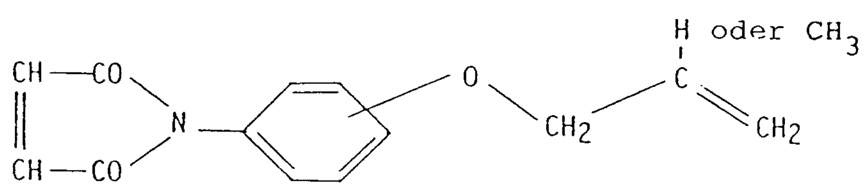

(III)

worin der Allyloxy- oder Methallyloxyrest in ortho-, meta- oder para-Stellung ist in bezug auf das Kohlenstoffatom des Benzolringes, das mit dem Stickstoff verbunden ist,

- oder aus der Verbindung umfassend:
  * ein Gemisch eines Monomeren der Formel

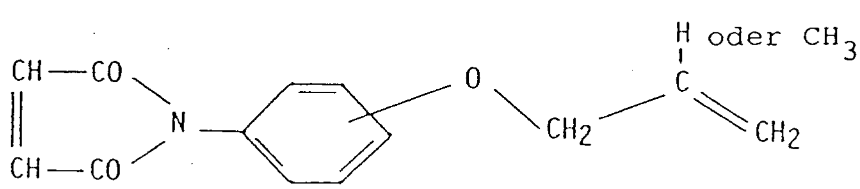

(III)

worin der Allyloxy- oder Methallyoxyrest in ortho-, meta- oder para-Stellung ist in bezug auf

das Kohlenstoffatom des Benzolringes, das mit dem Stickstoff verbunden ist,

* mit:

. mindestens einem monosubstituierten Derivat der Formel

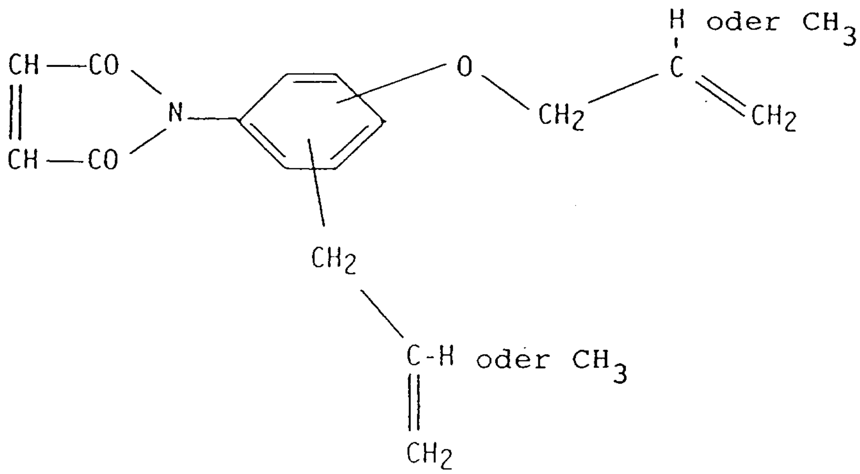

(IV)

. und gegebenenfalls einem oder mehreren disubstituierten Derivat(en) der Formel

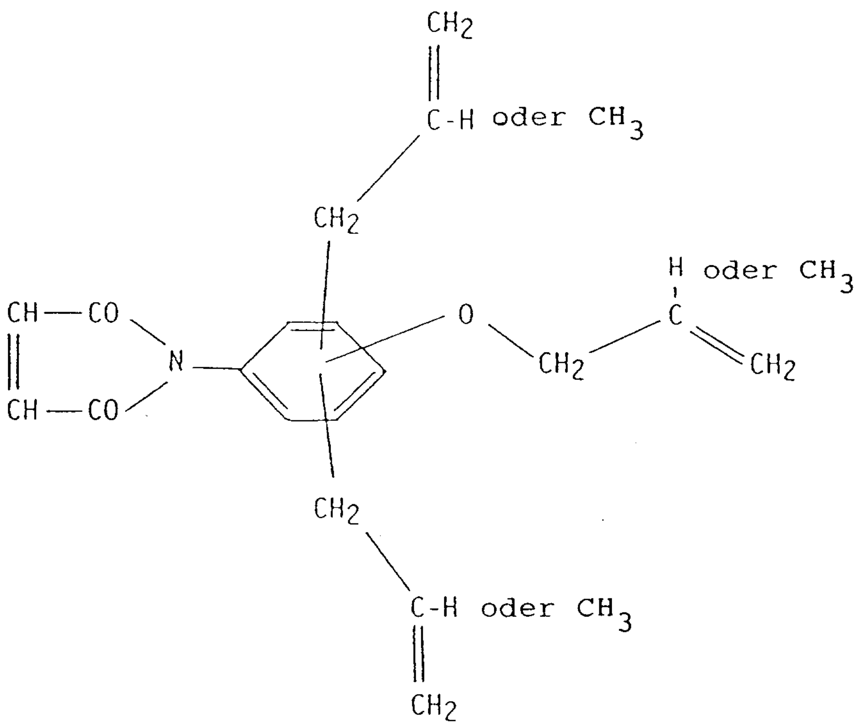

(V),

wobei die Mengen an N,N'-Bisimid(en) (a), Amino-Reagens (b) und gegebenenfalls copolymerisierbarem Reagens (c) so ausgewählt sind, daß das Verhältnis r:

$$\frac{\text{Gesamtgewicht der Reaktionsteilnehmer mit Imidgruppen (a) + gegebenenfalls (c)}}{\text{Gewicht des Reaktionsteilnehmers mit } NH_2\text{-Gruppen (b)}}$$

in dem Bereich von 0,5/1 bis 10/1 liegt, und das Gewicht des copolymerisierbaren Reaktionsteilnehmers (c), wenn man einen solchen verwenden möchte, bis zu 40 % des Gesamtgewichts der Reaktionsteilnehmer (a) + (b) + (c) darstellt,

wobei dieses Verfahren dadurch gekennzeichnet ist, daß die Polymerisation in Gegenwart einer Imidazolverbindung (d) entsprechend der allgemeinen Formel

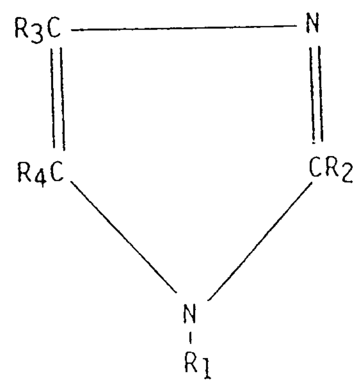

(VI)

durchgeführt wird, worin $R_1$, $R_2$, $R_3$ und $R_4$, die identisch oder verschieden sind, jeweils bedeuten: ein Wasserstoffatom, einen Alkyl- oder Alkoxyrest mit 1 bis 20 Kohlenstoffatomen, Vinyl, Phenyl, Nitro, wobei $R_3$ mit $R_4$ und den Kohlenstoffatomen, an die diese Reste gebunden sind, einen einzigen Ring bilden können, wobei $R_1$ auch eine Carbonylgruppe, gebunden an einen zweiten Imidazolring, darstellen kann, und die Menge an Imidazolverbindung (d) in dem Bereich von 0,01 bis 1 Gew.-%, bezogen auf die Gesamtheit der Reaktionsteilnehmer (a) + (b) + gegebe nenfalls (c), liegt.

**2.** Verfahren gemäß Anspruch 1, dadurch gekennzeichnet, daß man als Verbindung, welche ein Gemisch von N-(Meth)Allyloxyphenylmaleimid der Formel (III) mit einem oder mehreren (Meth)Allyl substitutions derivaten der Formel (IV) und gegebenenfalls der Formel (V) umfaßt, das Rohprodukt verwendet, das durch Durchführung des Verfahrens erhalten wird, das darin besteht, die drei folgenden Stufen durchzuführen, die in demselben Reaktionsgefäß aneinandergereiht werden:

- die erste Stufe besteht darin, in einem Lösungsmittelmilieu ein Aminophenol mit Maleinsäureanhydrid zur Reaktion zu bringen, wobei bei einer Temperatur von 20 °C bis 200 °C während einer Zeitdauer gearbeitet wird, die je nach der gewählten Temperatur von 30 Minuten bis 2 Stunden geht und zu einem ersten Reaktionsmilieu führt, das eine N-(Hydroxyphenyl)-maleaminsäureumfaßt;
- die zweite Stufe besteht darin, eine (Meth)Allylierungsreaktion der vorerwähnten Säure durchzuführen, indem das vorerwähnte erste Reaktionsmilieu mit einem (Meth)Allylhalogenid zur Reaktion gebracht wird, wobei bei einem pH gearbeitet wird, das bei einem konstanten Wert zwischen 7 und 14 durch Zugabe einer bestimmten Menge einer alkalischen wäßrigen Lösung eingestellt und aufrechterhalten wird, und bei einer Temperatur von 40 °C bis 150 °C gearbeitet wird und sie führt nach Ansäuern und Entfernung der wäßrigen Phase zu einem zweiten organischen Reaktionsmilieu, das eine N-[(Meth)Allyloxyphenyl]-maleaminsäure, eine oder mehrere N-[(Meth)-Allyloxy,(meth)allylphenyl]-maleaminsäure(n), und gegebenenfalls eine oder mehrere N-[(Meth)-Allyloxy,di(meth)allylphenyl]-maleaminsäure(n) umfaßt;
- die dritte Stufe besteht darin, eine Cyclisierungsreaktion der vorerwähnten Maleaminsäuren durchzuführen, indem das vorerwähnte zweite Reaktionsmilieu mit einem niederen Carbonsäureanhydrid in Gegenwart eines tertiären Amins und gegebenenfalls eines Katalysators zur Reaktion gebracht wird, dann das Lösungsmittel aus der Reaktion entfernt wird und sie führt zu einem Reaktions-Rohprodukt, das eine Verbindung darstellt, das ein Gemisch umfaßt, gebildet aus: mindestens 30 Gew.-% und vorzugsweise 50 bis 80 Gew.-% N-(Meth)Allyloxyphenyl-maleimid, 5 bis 50 Gew.-% und vorzugsweise 10 bis 35 Gew.-% eines oder mehrerer N-[(Meth)Allyloxy,-(meth)allylphenyl]-maleimide, und 0 bis 20 Gew.-% und vorzugsweise 0 bis 15 Gew.-% eines oder mehrerer N-[(Meth)Allyloxy,di(meth)allylphenyl]-maleimide.

**3.** Herstellungsverfahren der Polymeren mit Imidgruppen, die sich in Form wärmehärtbarer Präpolymerer (P) befinden, löslich in polaren organischen Lösungsmitteln, wie sie vorstehend in Anspruch 1 definiert

sind, und welche einen Erweichungspunkt bei einer Temperatur unterhalb 200 °C aufweisen, dadurch gekennzeichnet, daß man direkt das Gemisch der Reaktionsteilnehmer (a), (b), gegebenenfalls (c) und (d), wie sie vorstehend in einem der Ansprüche 1 oder 2 definiert sind, auf eineTemperatur zwischen 50 °C und 180 °C bis zur Erzielung eines flüssigen oder pastösen homogenen Produkts erhitzt.

**4.** Verfahren gemäß Anspruch 1, dadurch gekennzeichnet, daß es darin besteht, das Gemisch der Reaktionsteilnehmer zwischen 50 °C und 180 °C zu erhitzen, um in einer ersten Zeitdauer ein Präpolymeres (P) zu bilden, dann das Härten des Präpolymeren (P) durch Erhitzen auf eine Temperatur zwischen 150 °C und 300 °C zu bewirken.

**5.** Verfahren gemäß Anspruch 3 oder 4, dadurch gekennzeichnet, daß man, falls der fakultative Reaktionsteilnehmer (c) verwendet wird, ausgehend von dem/den Bisimid(en) (a) und dem Reaktionsteilnehmer (c) ein Präpolymeres (PP) bildet, dieses Präpolymere (PP) dann mit dem Amin-Reagens (b) und der Imidazolverbindung (d) erhitzt, um das Präpolymere (P) zu erhalten.

**6.** Verfahren gemäß Anspruch 3 oder 4, dadurch gekennzeichnet, daß man, falls der fakultative Reaktionsteilnehemr (c) verwendet wird, ausgehend von dem Amin-Reagens (b), dem Reaktionsteilnehmer (c) und der Imidazolverbindung (d) ein Präpolymeres (P'P') bildet, dieses Präpolymere (P'P') dann mit dem/den Bisimid(en) (a) erhitzt, um das Präpolymere (P) zu erhalten.

**7.** Verfahren gemäß Anspruch 1, dadurch gekennzeichnet, daß die Imidazolverbindung (d) ausgewählt ist aus der Gruppe bestehend aus Imidazol oder Glyoxalin, 1-Methylimidazol, 2-Methylimidazol, 1,2-Dimethylimidazol, 1-Vinylimidazol, 1-Vinyl-2-methylimidazol und Benzimidazol und Carbonyldiimidazol.

**8.** Verfahren gemäß Anspruch 1, dadurch gekennzeichnet, daß einerseits die Mengen an N,N'-Bisimid(en) (a), Amino-Reagens (b) und gegebenenfalls copolymerisierbarem Reagens (c) derart ausgewählt sind, daß das Verhältnis r:

$$\frac{\text{Gesamtgewicht der Reaktionsteilnehmer mit Imidgruppen (a) und gegebenenfalls (c)}}{\text{Gewicht des Reagens mit } NH_2\text{-Gruppen (b)}}$$

in dem Bereich von 1/1 bis 5/1 liegt und andererseits das Gewicht des copolymerisierbaren Reaktionsteilnehmers (c) - falls man einen solchen verwenden möchte - in dem Bereich von 5 bis 30 % des Gesamtgewichts der Reaktionsteilnehmer (a) + (b) + (c) liegt, und schließlich die Menge an Imidazolverbindung (d) in dem Bereich von 0,05 bis 0,5 Gew.-% in bezug auf die Gesamtheit der Reaktionsteilnehmer (a) + (b) + gegebenenfalls (c) liegt.